# EUROPEAN PATENT SPECIFICATION

(11) **EP 2 929 755 B1**
(45) Date of publication and mention of the grant of the patent: **15.04.2020**
(21) Application number: 13811333.7
(22) Date of filing: 06.12.2013
(51) Int. Cl.: H05B 6/12, F24C 15/10

(54) **FLIP TOP INDUCTION COOKTOP**
INDUKTIONSKOCHFELD MIT KLAPPDECKEL
PLAN DE CUISSON À INDUCTION À ABATTANT

(30) Priority: 06.12.2012 US 201261734046 P
(43) Date of publication of application: 14.10.2015
(73) Proprietor: Electrolux Home Products, Inc., Charlotte, NC 28262 (US)
(72) Inventor: PHILLIPS, Bryan, Thomas, Springfield, TN 37172 (US); PADGETT, Michael, Springfield, TN 37172 (US); MARTIN, Brian, Springfield, TN 37172 (US); JEANNETEAU, Laurent, Springfield, TN 37172 (US); FATTORINI, Andrea, Springfield, TN 37172 (US)
(74) Representative: Electrolux Group Patents
(86) International application number: PCT/US2013/073543
(87) International publication number: WO 2014/089419

(56) References cited:
- EP-A1- 1 927 811
- EP-A1- 2 019 568
- EP-A2- 2 397 775
- DE-A1-102006 044 131
- DE-U1-202005 001 294
- JP-A- H06 215 859
- US-A1- 2004 045 952

## Description

### CROSS-REFERENCE TO RELATED APPLICATIONS

This application claims the benefit of U.S. Provisional Application No. 61/734,046, filed December 6, 2012.

### BACKGROUND OF THE INVENTION

### 1. Field of the Invention

This application relates generally to kitchen appliances and, more particularly, to induction cooktops.

### 2. Description of Related Art

Many kitchens lack the amount of countertop surface area desired by residents, who would benefit from additional space usable for preparation of food items, for example. A portion of the already-limited countertop surface area available for food preparation is also occupied by other kitchen necessities such as cooktops on which food can be cooked.

One such cooktop commonly found in kitchens is an induction cooktop. Induction cooktops conduct a high-frequency current through a heating coil to generate a high-frequency magnetic flux that induces a current in cookware made of a ferromagnetic material. This induced current causes the cookware, and the food contained therein, to be heated. To generate the high-frequency current conducted through the heater coils, however, induction cooktops have utilized bulky circuitry fixed immediately adjacent to each heater coil. Such circuitry rendered induction cooktops to be fixed, permanent installations that consumed valuable countertop space.

The document JP H06 215859 A discloses an induction heating cooker comprising a main body and a heating section comprising a coil. The main body comprises a control circuit supplying the coil with high-frequency current. The main body is mounted in a wall behind a cooking table on which the heating section rests during a cooking process. Main body and heating section are coupled by a connecting device and a shaft allowing the heating section to pivot from a horizontal orientation for the cooking process to a vertical orientation in which leaning against the wall.

### BRIEF SUMMARY OF THE INVENTION

Accordingly, there is a need in the art for an adjustable induction cooktop having an adjustable cooking surface including a heating coil configured to be pivotally or otherwise adjusted relative to a generator board. The adjustable cooking surface can thus be adjusted to expose, and render usable, a countertop or other work surface concealed by the cooking surface while the cooking surface is in a cooking orientation in which cookware is inductively heated as a result of the conduction of electric current through the heating coil.

According to one aspect, the subject application involves a system comprising a cabinet and a cooktop assembly including a generator that produces a high-frequency alternating current and is configured to be coupled to a surface of a cabinet. The cooktop assembly further includes an adjustable cooking surface comprising a heating coil electrically connected to the generator to conduct the high-frequency alternating current produced by the generator and induce an induced current in a cooking vessel supported by the movable portion while the movable portion is in a cooking orientation. An adjustable coupling pivotally couples the adjustable cooking surface to the generator and supports the adjustable cooking surface at a plurality of different angular orientations relative to the generator. The cabinet comprises the surface of a countertop provided atop the cabinet. The generator is located downwardly of the surface of the countertop. The generator comprises a generator housing configured to be coupled to the cabinet with a major planar surface of the generator housing oriented in a substantially vertical orientation within an interior of the cabinet.

According to another aspect, the subject application involves a cooktop assembly including an adjustable cooking surface with a heating coil that conducts an alternating electric current and induces an induced current in a cooking vessel supported by the adjustable cooking surface to heat the cooking vessel. A hinge pivotally supports the adjustable cooking surface to be pivotally adjusted between a cooking orientation, in which an externally-exposed surface of the adjustable cooking surface is substantially horizontal, and a stowed orientation in which the externally-exposed surface is substantially vertical. A generator is coupled to the hinge and is disposed within a hinge housing to generate and supply the alternating electric current conducted by the heating coil, and a duct is formed within a hinge housing to convey cooling air entering an air inlet generally toward the adjustable cooking surface.

According to another aspect, the subject application involves a cooktop assembly including a generator that produces a high-frequency alternating current and is configured to be coupled to a surface of a cabinet. An adjustable cooking surface is also provided, and includes a heating coil electrically connected to the generator to conduct the high-frequency alternating current produced by the generator and induce an induced current in a cooking vessel supported by the movable portion while the movable portion is in a cooking orientation. A hinge pivotally couples the adjustable cooking surface to the generator and supports the adjustable cooking surface at a plurality of different angular orientations relative to the generator. An air inlet is formed in at least one of a hinge housing forming a portion of the hinge and a generator housing enclosing at least a portion of the generator to allow for the introduction of cooling air into the cooktop assembly. The hinge housing is adapted to be at least partially inserted into a recess formed in the surface of the cabinet. A duct is formed within the hinge housing to convey cooling air entering the air inlet generally toward the adjustable cooking surface. A damping device coupled to the hinge slows pivotal adjustment of the adjustable cooking surface toward a countertop surface of the cabinet to which the cooktop assembly is to be installed relative to an undamped rate at which the adjustable cooking surface can be pivotally adjusted.

The above summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

### BRIEF DESCRIPTION OF SEVERAL VIEWS OF THE DRAWING

The invention may take physical form in certain parts and arrangement of parts, embodiments of which will be described in detail in this specification and illustrated in the accompanying drawings which form a part hereof and wherein:
FIG. 1 is a perspective view of an example embodiment of a cooktop with a movable portion in a raised position;
FIG. 2 is a perspective view of the example embodiment of the cooktop with the movable portion in a lowered position;
FIG. 3 is a perspective view of a first embodiment of the cooktop that is mounted relative to a cabinet and where a movable portion is in the lowered position;
FIG. 4 is a perspective view of the first embodiment of the cooktop of FIG. 3 and where the movable portion is in the raised position;
FIG. 5 is a perspective view of the first embodiment of the cooktop of FIG. 3 shown with a first cooling air path;
FIG. 6 is a perspective view of a second embodiment of the cooktop that is mounted relative to a cabinet and where the movable portion is in the lowered position; and
FIG. 7 is a perspective view of the first embodiment of the cooktop of FIG. 3 shown with a second cooling air path.

### DETAILED DESCRIPTION OF THE INVENTION

Certain terminology is used herein for convenience only and is not to be taken as a limitation on the present invention. Relative language used herein is best understood with reference to the drawings, in which like numerals are used to identify like or similar items. Further, in the drawings, certain features may be shown in somewhat schematic form.

It is also to be noted that the phrase "at least one of', if used herein, followed by a plurality of members herein means one of the members, or a combination of more than one of the members. For example, the phrase "at least one of a first widget and a second widget" means in the present application: the first widget, the second widget, or the first widget and the second widget. Likewise, "at least one of a first widget, a second widget and a third widget" means in the present application: the first widget, the second widget, the third widget, the first widget and the second widget, the first widget and the third widget, the second widget and the third widget, or the first widget and the second widget and the third widget.

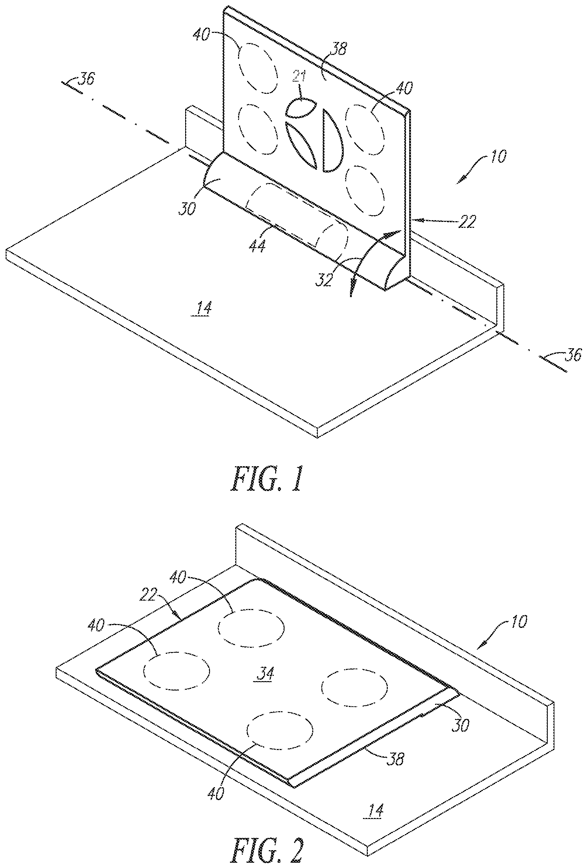

Referring now to FIGS. 1-4, an exemplary embodiment of a cooktop assembly 10 is illustrated. The cooktop assembly 10 may be arranged with respect to a cabinet 12 that may be part of a kitchen, for example. The cabinet 12 includes a countertop 14 and optionally doors 16 and/or drawers 18 that provide access to storage space 20. The countertop 14 provided atop the cabinet 12 may be formed of a durable, and optionally heat-resistant solid material with a flat surface on which food items can be handled and prepared for cooking and/or serving. Illustrative examples of the material from which the countertop surface 14 can be formed include, but are not limited to, granite, marble, quartz, concrete or the like.

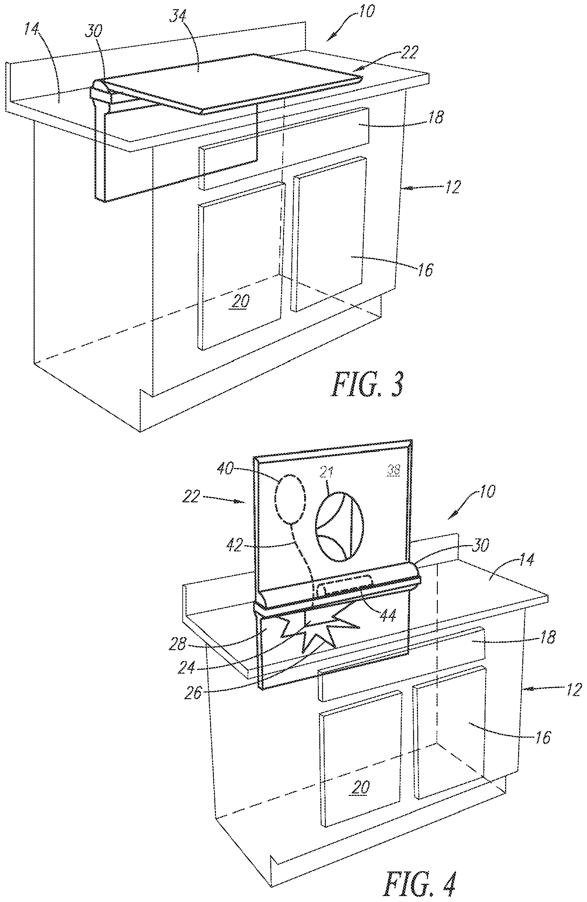

According to one embodiment, the cooktop 10 includes an adjustable cooking surface 22 that is movable relative to a stationary generator 24 (shown in the cutaway region 26 of the generator housing 28 appearing in FIG. 4). The cooking surface 22 is coupled to the generator 24 by a hinge 30, for example, such that the cooking surface 22 can be pivoted around the hinge 30 relative to the generator 24 along the arcuate path 32 shown for illustrative purposes in FIG. 1. In other words, the generator 24 is installed at a fixed location of the cabinet 12 and is not designed to pivot about the hinge 30 like the cooking surface 22. According to an embodiment of the cooktop assembly 10, the cooking surface 22 can optionally be pivotally adjusted about an axis of rotation 36 established by the hinge 30 between a cooking orientation as shown in FIGs. 2 and 3 in which an externally-exposed surface 34 on which a cooking vessel (e.g., pot, pan, etc...) (not shown) is to be supported while food therein is cooked is substantially horizontal, and a stowed orientation in which the externally-exposed surface 34 is arranged in a substantially-upright, vertical orientation as shown in FIGs. 1 and 4). The externally-exposed surface 34 of the cooking surface 22 is said to be substantially-horizontal in the cooking orientation, meaning that the externally-exposed surface 34 is not sloped to an extent that risks allowing the cooking vessel to slide. Also, the externally-exposed surface 34 of the cooking surface 22 is said to be substantially-vertical in the stowed orientation, meaning that the cooking surface 22 is upright enough to allow the portion of the countertop 14 that is concealed by the cooking surface 22 in the cooking orientation to be exposed for use in the preparation of food items. In the stowed orientation, the cooking surface 22 remains extended vertically above the countertop 14 as shown in FIGs. 1 and 4. According to an embodiment, the cooking surface 22 and hinge 30 can optionally lack a vertically-adjustable support structure that would allow the cooking surface 22, or a substantial portion thereof, to be adjusted to be recessed below the countertop 14 when not in use to cook food items.

The cooking surface 22 may be configured in a panel-like shape according to the present embodiment. A glass pane can form the externally-exposed surface 34, and overlay a tray portion 38 with upright side walls forming a bottom and sides of the cooking surface 22. The bottom of the cooking surface 22 opposes, and optionally rests on the countertop 14 while the cooking surface 22 is in the cooking orientation. For the embodiments shown in FIGs. 1 and 4, the bottom feature 21 includes an insignia, logo, trademark/service mark, etc... provided to the bottom of the tray portion 38 of the cooking surface 22 to be visible to occupants of the kitchen while the cooking surface 22 is in its stowed orientation. However, the bottom feature 21 can take on any desired appearance and/or structure. For instance, the bottom feature 21 can include a so-called flat-panel television (e.g., LCD, LED, OLED, plasma displays, etc...) on which motion picture video and/or still images and/or computer-generated images can be displayed, a dry-erase board (e.g., glossy, white or other colored surface for nonpermanent markings), chalkboard, any other surface, and any combination thereof in place of, or in addition to the logo shown in, and described with reference to FIGs. 1 and 4 for illustrative purposes.

At least one, and optionally a plurality (e.g., four (4), five (5), etc...) heating coils 40 (shown by hidden lines in FIGs. 1, 2 and 4) are supported within the tray portion 38 and concealed by the glass pane forming the externally-exposed surface 34 of the cooking surface 22. A space or other suitable duct can be established between the one or more heating coils 40 and the glass pane on which the cooking vessel is to be supported to allow for the passage of cooling air there through to provide a cooling effect to the heating coil(s) 40. The components included as part of the cooking surface 22 can be kept to a minimum to minimize the profile of the cooking surface 22 resting on the countertop 14 in the cooking orientation. According to alternate embodiments of the cooktop assembly 10, of all of the electronic components utilized to conduct electric currents to inductively heat the cooking vessel, the cooking surface 22 can be limited to include only the coils 40 and optionally a portion of the cable(s) 42 described below can be housed within the cooking surface 22.

Each of the heating coils 40 can be formed as a substantially-flat, spiral coil formed from a length of an electrically-conductive material such as copper, for example, wound several turns in a common plane. To be considered substantially-flat, every turn of the coil does not necessarily have to be arranged exactly in the same common plane, as minor deviations are permissible. However, the major planar surface of the resulting heating coil 40 closest to the overlaid glass pane of the cooking surface 22, when considered as a whole, should be approximately parallel with the externally-exposed surface 34 on which cooking vessel rests while being inductively heated. Since the generator 24 that drives each coil 40 is arranged separate from the cooking surface 22, the cooking surface can optionally have a height (in the vertical dimension, extending normally upward from the countertop 14 when the cooking surface 22 is viewed in the cooking orientation) that is less than one (1") inch. Accordingly, the vertical distance from the countertop 14 to the externally-exposed surface 34 can be approximately one (1") inch or less.

In operation to heat a cooking vessel supported on the externally-exposed surface 34, a high-frequency (e.g., at least 10 kHz, at least 20 kHz, etc...) alternating current is conducted through the wound coil. The high-frequency alternating current is produced by a collection of electric circuitry referred to herein as the generator 24 from an alternating current (e.g., having a voltage of approximately 220 V at a frequency of 50 Hz, or having a voltage of approximately 240 V at 60 Hz) supplied by a conventional AC mains electrical outlet in a residential dwelling. A flexible cable 42 (shown as hidden lines in FIG. 4) or other suitable electrically-conductive material extends between the generator 24 and at least one, and optionally a plurality of heating coils 40 to conduct the high-frequency electric current between the generator 24 and the respective heating coil(s) 40. The cable 42 can be of a suitable length to maintain the electrical connection between the heating coil(s) 40 and the generator 24 regardless of the orientation in which the cooking surface 22 is arranged.

The generator 24 can optionally be at least partially, and optionally fully, enclosed within a rectangular, box-shaped generator housing 28. The hinge 30, which can optionally include a plurality of concentrically-aligned cylindrical portions, allows the cooking surface 22 to be adjusted toward the horizontal cooking orientation, and adjusted in the opposite direction approximately 90° toward the upright stowed orientation. To minimize the likelihood of damage to the cooking surface 22 and/or underlying countertop 14 from the inadvertent dropping of the cooking surface 22, the cooktop assembly can optionally be provided with a damping device 44 to slow pivotal adjustment of the cooking surface 22 toward the countertop 14 from a rate at which the cooking surface 22 would otherwise drop under the force of gravity alone, without the damping device 44 (an "undamped" rate). Shown as hidden lines in FIGs. 1 and 4, the damping device can optionally include a fluid-filled cylinder containing relatively-adjustable segments, the relative rotation of which are impeded by a viscous (e.g., having a greater viscosity than water at room temperature and pressure) fluid. According to embodiments of the cooking apparatus 10, the damping device 44 can be enclosed within a cylindrically-shaped hinge 30.

Installed on the cabinet 12, the hinge 30 can be at least partially inserted into an aperture formed adjacent to a rearward region of the countertop 14. The aperture may have inside dimensions similar to the external dimensions of the hinge 30. According to the embodiments illustrated in FIGs. 1-4, the generator housing 28 extends downwardly, through the aperture into an interior (e.g., within the storage space 20) of the cabinet 12, or optionally reward of the storage space 20 (e.g., between a wall and a rear partition establishing the depth of the storage space 20). Parts of the cabinet 12 may be cut out or otherwise customized to accommodate installation of the cooktop assembly 10.

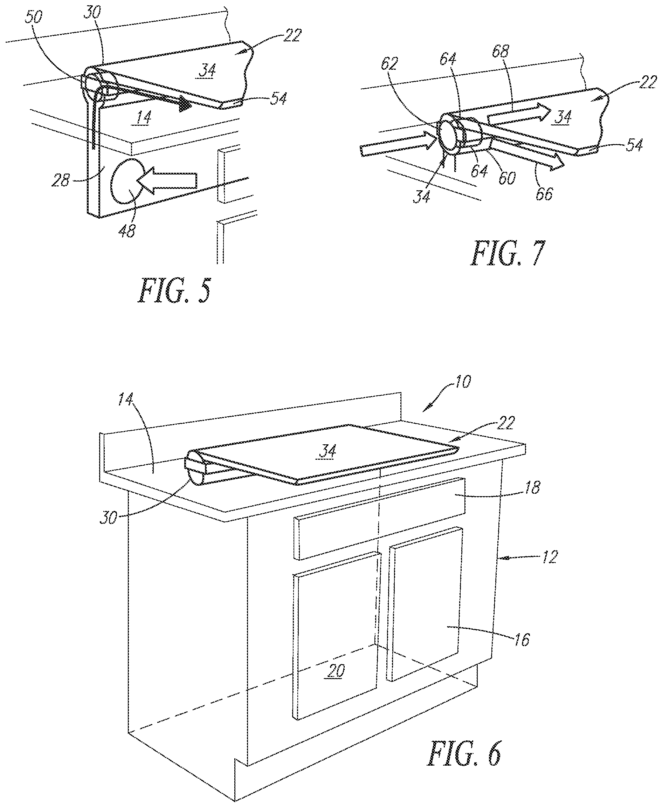

The cooktop assembly 10 can also optionally include one or more air inlets 48, shown in FIG. 5, through which cooling air can enter the generator housing 28. The inlet 48 can be formed as a grate or other restricted aperture, optionally adjacent to a lower region of the generator housing 28 in the vertical orientation, where cooler air than that adjacent to the uppermost region of the generator housing 28 near the hinge 30 may be available. Cooling air entering the generator housing 28 through the air inlet 48 can optionally pass over the circuitry forming the generator 24 through natural convection or forced convection created through operation of a fan such as a so-called squirrel-cage blower or fan 50 (FIG. 5), thereby providing a cooling effect to that circuitry as the cooling air travels upward, generally toward the hinge 30. According to the embodiment illustrated in FIG. 5, the cooling air may follow a path indicated generally by arrow 52, and enter the cooktop assembly adjacent the lower region of the generator housing 28, move upward therein, and then exit the generator housing 28 to be introduced to a duct within the interior of the hinge 30. The cooling air is then expelled from the hinge 30 into the duct between the heating coil(s) 40 and the glass pane forming the externally-exposed surface 34, where it cools the heating coil(s) 40 en route to being expelled from a forward region 54 of the cooking surface 22 as illustrated by the move past the hinge and the induction coils, and exit at the front of the cooking surface 22 (FIG. 5).

As shown in FIGs. 6 and 7, another embodiment of the cooktop assembly 10 may be configured similarly so as to include the hinge 30 and the cooking surface 22, but lack the vertically-oriented, upright generator housing 28 of the preceding embodiments. Instead, the cooking surface 22 include a substantially-cylindrically shaped hinge housing 60 that houses the circuitry forming the generator 24 that supplies the high-frequency electric current required to power the heating coil(s) 40. Thus, according to the present embodiment, the generator 24 is disposed within an interior cavity defined by the hinge 30. Similar to the preceding embodiments, the hinge 30 may be at least partially inserted into an aperture formed adjacent to a rearward portion of the cabinet countertop 14. In the present embodiment, however, the hinge housing 60 includes an air inlet 62 through which cooling air can enter a duct or other interior passage defined in the hinge housing 60. Again, a suitable fan or blower 64 can be provided to achieve the desired airflow through the hinge housing 60 and/or cooking surface 22. Just as for the preceding embodiments, the cooling air exiting the hinge housing 60 in a forward direction can be introduced to a duct, the space between the one or more heating coils 40 and the glass pane on which the cooking vessel is to be supported, or other interior passage defined within the cooking surface 22 to provide a cooling effect to the heating coil(s) 40, and optionally other features involved in inducing the electric current in the cooking vessel, before being exhausted from a forward region 54 of the cooking surface 22 in the direction generally parallel to the direction indicated by arrow 66. Additionally, or alternately, the cooling air can be directed along a length of the hinge 30 in the direction of arrow 68, in a transverse direction relative to the cooling air path indicated by arrow 66. Thus, some embodiments of the cooktop assembly 10 can be configured to achieve a multi-dimensional cooling effect for different portions of the cooktop assembly 10.

Any of the embodiments described herein can optionally include a balance spring in place of, or in addition to the damping device 44, to support at least a portion of the cooking surface's 22 weight and give the impression that the cooking surface 22 is lightweight. The balance spring can optionally be a helical spring or other suitable device, optionally disposed within the hinge 30 similar to the damping device 44, to provide the cooking surface 22 with a near "neutral buoyancy" that allows the cooking surface 22 to be raised by the application of a force that is less than would be required to pivotally adjust the cooking surface 22 without the balance spring.

Moreover, the cooktop assembly 10 may be provided with a controller that turns off and/or interferes with activation of all heat-generating operations once the cooking surface 22 is adjusted away from the cooking orientation. Such a feature can be embodied in a number of ways such as a switch, a level sensor, or parts provided on a printed circuit board. Furthermore, the cooktop assembly 10 may also be provided with a locking feature that prevents movement of the cooking surface 22 away from the cooking orientation if the presence of a kitchenware is sensed on the externally-exposed surface. For example, an inductive signal can be generated by the heating coil(s) 40 or by a sensor adjacent to the heating coil(s) 40, or a weight sensor can be utilized to detect the presence of the cooking vessel or other foreign object. Thus, the locking feature, which can be positioned adjacent to the damping device within the hinge 30, would allow the cooking surface 22 to be raised only if no item is present on the externally-exposed surface of the cooking surface 22. This can be enabled by using induction coils with a pan sense capability.

The entirety of the cooktop assembly 10 may be "factory-made", ready for installation, such that the generator 24, hinge 30 and heating coil(s) 40 require no assembly at the site of installation by the end-user or service technician, and only the mounting of the cooktop assembly 10 to the cabinet 12 is necessary. This is beneficial with respect to the heating coil(s) 40 which are high voltage, high current and high frequency devices. Because the quality and torque of the connection of the heating coil(s) to the generator 24 can affect proper operation of the cooktop assembly 10, distributing the cooktop assembly 10 in a factory-made form ensures proper assembly is achieved.

The aforementioned embodiments of the cooktop assembly 10 allow the space underneath the cooking surface 22 to be used as countertop space for preparation of food items to be served and/or cooked. It is also possible to configure the cabinet with drawers directly below the cooking surface because the space directly underneath the cooking surface 22 and the cooking surface when the cooktop assumes the lowered position is not occupied by components of the cooktop.

Illustrative embodiments have been described, hereinabove. It will be apparent to those skilled in the art that the above devices and methods may incorporate changes and modifications without departing from the general scope of this invention. It is intended to include all such modifications and alterations within the scope of the present invention. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A system comprising a cabinet and a cooktop assembly (10), the system comprising:
a generator (24) that produces a high-frequency alternating current;
an adjustable cooking surface (22) comprising a heating coil (40) electrically connected to the generator (24) to conduct the high-frequency alternating current produced by the generator (24) and induce an induced current in a cooking vessel supported by the adjustable cooking surface (22) while the adjustable cooking surface (22) is in a cooking orientation; and
an adjustable coupling that pivotally couples the adjustable cooking surface (22) to the generator (24) and supports the adjustable cooking surface (22) at a plurality of different angular orientations relative to the generator (24), **characterized in that** the cabinet (12) comprises the surface of a countertop (14) provided atop the cabinet (12), and **in that** the generator (24) is located downwardly of the surface of the countertop (14), and **in that** the generator (24) comprises a generator housing (28) configured to be coupled to a surface of the cabinet (12) with a major planar surface of the generator housing (28) oriented in a substantially vertical orientation within an interior of the cabinet (12).

2. The system of claim 1 further comprising an electrical connector (42) that is adaptable to establish a conductive pathway between the generator (24) and the heating coil (40) while the adjustable cooking surface (22) is in each of the plurality of different angular orientations.

3. The system of claim 1, wherein the adjustable cooktop surface (22) comprises a substantially-planar glass pane concealing the heating coil (40) and at least one additional heating coil (40), and the heating coil (40) and the at least one additional heating coil (40) are arranged in a common plane substantially parallel with a planar exterior surface of the glass pane.

4. The system of claim 1, wherein the adjustable coupling comprises a hinge (30) comprising a substantially-cylindrical portion that is to be at least partially inserted into a recess formed in the surface of the countertop (14) and which is exposed when the adjustable cooking surface (22) is adjusted to an upright orientation relative to the generator (24).

5. The system of claim 4, wherein the hinge (30) comprises a damping feature (44) configured to dampen pivotal adjustment of the adjustable cooking surface (22) about the hinge (30) toward the top surface of the cabinet (12).

6. The system of claim 4, wherein the hinge (30) comprises a balance spring configured to prevent pivotal adjustment of the adjustable cooking surface (22) about the hinge (30) toward the top surface of the cabinet (12) under only a gravitational force, and without an externally-applied force, imparted on the adjustable cooking surface (22).

7. The system of claim 1, wherein the generator housing (28) comprises:
an air inlet (48) through which cooling air enters the generator housing (28); and
an interior passage directed generally toward the adjustable cooking surface (22), wherein the cooling air entering the air inlet (48) passes through the interior passage to provide a cooling effect to the generator (24) within the generator housing (28).

8. The system of claim 7, wherein the adjustable cooking surface (22) comprises a duct between the heating coil and a glass pane on which the cooking vessel is to be supported, and the housing (28) further comprises an air outlet in fluid communication with the duct through which the cooling air is introduced to the duct.

9. The system of claim 4, wherein the hinge (30) comprises a generally-cylindrical hinge housing (60) comprising:
an inlet formed adjacent to a lateral end of the hinge (30) through which cooling air enters the hinge housing (60); and
an outlet through which the cooling air entering the inlet exits the hinge housing (60) in a direction generally toward a front edge of the adjustable cooking surface (22).

10. The system of claim 1 further comprising a controller that interferes with operation of the heating coil (40) while the adjustable cooking surface (22) is adjusted to an alternate orientation other than the cooking orientation.

11. The system of claim 1 further comprising a locking mechanism that prevents adjustment of the adjustable cooking surface (22) from the cooking orientation while the cooking vessel is determined to be present on the adjustable cooking surface (22).

12. A cooktop assembly (10) comprising:
a generator (24) that produces a high-frequency alternating current;
an adjustable cooking surface (22) comprising a heating coil (40) that conducts an alternating electric current and induces an induced current in a cooking vessel supported by the adjustable cooking surface (22) to heat the cooking vessel;
a hinge (30) that pivotally supports the adjustable cooking surface (22) to be pivotally adjusted between a cooking orientation where an externally-exposed surface (34) of the adjustable cooking surface (22) is substantially horizontal and a stowed orientation where the externally-exposed surface (34) is substantially vertical **characterized in that**
the generator (24) is coupled to the hinge (30) and is disposed within a hinge housing (60) to generate and supply the alternating electric current conducted by the heating coil (40); and
a duct is formed within the hinge housing (60) to direct cooling air entering an air inlet (48) generally toward the adjustable cooking surface (22).

13. The cooktop assembly (10) of claim 12, wherein the air inlet (48) is provided to the hinge housing (60) to direct cooling air entering the air inlet (48) along a length of the hinge housing (60) in a direction transverse to the direction of the air entering the air inlet (48) and flowing toward the adjustable cooking surface (22).

14. The cooktop assembly (10) of claim 13, wherein the air inlet (48) is formed adjacent to a lateral end of the hinge housing (60) and the cooling air enters the air inlet (48) and provides a cooling effect to the generator (24) before being directed by the duct toward the adjustable cooking surface (22).

15. The cooktop assembly (10) of claim 12, wherein the hinge housing (60) is substantially cylindrical and is to be at least partially inserted into a recess formed in a top surface of a cabinet (12) to which the cooktop (10) assembly is to be installed.

16. The cooktop assembly (10) of claim 12, wherein the hinge (30) comprises a damping feature configured to slow pivotal adjustment of the adjustable cooking surface (22) toward a top surface of a cabinet (12) to which the cooktop assembly (10) is to be installed relative to an undamped rate at which the adjustable cooking surface (22) can be pivotally adjusted.

17. The cooktop assembly (10) of claim 13, wherein the air inlet (48) is formed adjacent to a lowermost region of the generator housing (28) such that the cooling air entering the air inlet (48) provides a cooling effect to the generator (24) before being directed by the duct provided to the hinge (30) toward the adjustable cooking surface (22).

18. A cooktop assembly (10) comprising:
a generator (24) that produces a high-frequency alternating current;
an adjustable cooking surface (22) comprising a heating coil (40) electrically connected to the generator (24) to conduct the high-frequency alternating current produced by the generator (24) and induce an induced current in a cooking vessel supported by the adjustable cooking surface (22) while the adjustable cooking surface (22) is in a cooking orientation;
a hinge (30) that pivotally couples the adjustable cooking surface (22) to the generator (24) and supports the adjustable cooking surface (22) at a plurality of different angular orientations relative to the generator (24);
an air inlet (48) formed in at least one of a hinge housing (60) forming a portion of the hinge (30) and a generator housing (28) enclosing at least a portion of the generator (24), **characterized by** the generator (14) being configured to be coupled to a surface of a cabinet (12) and the hinge housing (60) being adapted to be at least partially inserted into a recess formed in the surface of the cabinet (12);
a duct formed within the hinge housing (60) that conveys cooling air entering the air inlet (48) generally toward the adjustable cooking surface (22); and
a damping device coupled to the hinge (30) to slow pivotal adjustment of the adjustable cooking surface (22) toward a top surface of a cabinet (12) to which the cooktop assembly (10) is to be installed relative to an undamped rate at which the adjustable cooking surface (22) can be pivotally adjusted.

## Patentansprüche

1. System umfassend einen Schrank und eine Kochfeldbaugruppe (10), wobei das System umfasst:
einen Generator (24), der einen hochfrequenten Wechselstrom erzeugt;
eine einstellbare Kochfläche (22) umfassend eine Heizspule (40), die elektrisch mit dem Generator (24) verbunden ist, um den durch den Generator (24) erzeugten hochfrequenten Wechselstrom zu leiten und einen Induktionsstrom in einem Kochgefäß zu induzieren, das von der einstellbaren Kochfläche (22) getragen ist, während sich die einstellbare Kochfläche (22) in einer Kochausrichtung befindet; und
eine einstellbare Kopplungsvorrichtung, die die einstellbare Kochfläche (22) schwenkbar mit dem Generator (24) koppelt und die einstellbare Kochfläche (22) in mehreren unterschiedlichen Winkelausrichtungen in Relation zu dem Generator (24) abstützt, **dadurch gekennzeichnet, dass** der Schrank (12) die Fläche einer Arbeitsplatte (14) umfasst, die auf dem Schrank (12) bereitgestellt ist, und dass sich der Generator (24) unterhalb der Fläche der Arbeitsplatte (14) befindet, und dass der Generator (24) ein Generatorgehäuse (28) umfasst, das ausgestaltet ist, mit einer Fläche des Schranks (12) gekoppelt zu sein, wobei eine ebene Hauptfläche des Generatorgehäuses (28) in einer im Wesentlichen senkrechten Ausrichtung in einem Inneren des Schranks (12) ausgerichtet ist.

2. System nach Anspruch 1, ferner umfassend einen elektrischen Verbinder (42), der so angepasst werden kann, dass er einen leitfähigen Pfad zwischen dem Generator (24) und der Heizspule (40) herstellt, während sich die einstellbare Kochfläche (22) in jeder der mehreren unterschiedlichen Winkelausrichtungen befindet.

3. System nach Anspruch 1, wobei die einstellbare Kochfeldfläche (22) eine im Wesentlichen ebene Glasscheibe umfasst, die die Heizspule (40) und mindestens eine zusätzliche Heizspule (40) verdeckt, und wobei die Heizspule (40) und die mindestens eine zusätzliche Heizspule (40) in einer gleichen Ebene im Wesentlichen parallel mit einer ebenen Außenfläche der Glasscheibe angeordnet sind.

4. System nach Anspruch 1, wobei die einstellbare Kopplungsvorrichtung ein Scharnier (30) umfasst, das einen im Wesentlichen zylindrischen Abschnitt umfasst, der zumindest teilweise in eine in der Fläche der Arbeitsplatte (14) ausgebildete Aussparung einzusetzen ist und der freiliegt, wenn die einstellbare Kochfläche (22) in einer aufrechten Ausrichtung in Relation zu dem Generator (24) eingestellt ist.

5. System nach Anspruch 4, wobei das Scharnier (30) ein Dämpfungsmerkmal (44) umfasst, das ausgestaltet ist, eine Schwenkeinstellung der einstellbaren Kochfläche (22) um das Scharnier (30) hin zu der oberen Fläche des Schranks (12) zu dämpfen.

6. System nach Anspruch 4, wobei das Scharnier (30) eine Ausgleichsfeder umfasst, die ausgestaltet ist, eine Schwenkeinstellung der einstellbaren Kochfläche (22) um das Scharnier (30) hin zu der oberen Fläche des Schranks (12) unter ausschließlich einer Schwerkraft und ohne eine extern aufgebrachte Kraft, die auf die einstellbare Kochfläche (22) wirkt, zu verhindern.

7. System nach Anspruch 1, wobei das Generatorgehäuse (28) umfasst:
einen Lufteinlass (48), durch den Kühlluft in das Generatorgehäuse (28) eintritt; und
einen inneren Durchgang, der im Allgemeinen hin zu der einstellbaren Kochfläche (22) gerichtet ist, wobei die in den Lufteinlass (48) eintretende Kühlluft durch den inneren Durchgang passiert, um eine Kühlwirkung auf den Generator (24) in dem Generatorgehäuse (28) bereitzustellen.

8. System nach Anspruch 7, wobei die einstellbare Kochfläche (22) einen Kanal zwischen der Heizspule und einer Glasscheibe umfasst, auf der das Kochgefäß getragen werden soll, und wobei das Gehäuse (28) ferner einen Luftauslass in Fluidverbindung mit dem Kanal umfasst, durch den die Kühlluft in den Kanal eingebracht wird.

9. System nach Anspruch 4, wobei das Scharnier (30) ein im Allgemeinen zylindrisches Scharniergehäuse (60) umfasst, umfassend:
einen Einlass, der angrenzend an ein seitliches Ende des Scharniers (30) ausgebildet ist, durch den Kühlluft in das Scharniergehäuse (60) eintritt; und
einen Auslass, durch den die in den Einlass eintretende Kühlluft aus dem Scharniergehäuse (60) in einer Richtung in Allgemeinen hin zu einer Vorderkante der einstellbaren Kochfläche (22) austritt.

10. System nach Anspruch 1, ferner umfassend eine Steuerung, die in einen Betrieb der Heizspule (40) eingreift, während die einstellbare Kochfläche (22) in einer anderen Ausrichtung als der Kochausrichtung eingestellt ist.

11. System nach Anspruch 1, ferner umfassend einen Verriegelungsmechanismus, der eine Einstellung der einstellbaren Kochfläche (22) von der Kochausrichtung verhindert, während bestimmt ist, dass sich das Kochgefäß auf der einstellbaren Kochfläche (22) befindet.

12. Kochfeldbaugruppe (10), umfassend:
einen Generator (24), der einen hochfrequenten Wechselstrom erzeugt;
eine einstellbare Kochfläche (22) umfassend eine Heizspule (40), die einen elektrischen Wechselstrom leitet und einen Induktionsstrom in einem Kochgefäß induziert, das von der einstellbaren Kochfläche (22) getragen ist, um das Kochgefäß zu erwärmen;
ein Scharnier (30), das die einstellbare Kochfläche (22) schwenkbar trägt, um schwenkbar zwischen einer Kochausrichtung, in der eine nach außen freiliegende Fläche (34) der einstellbaren Kochfläche (22) im Wesentlichen waagerecht ist, und einer verstauten Ausrichtung, in der die nach außen freiliegende Fläche (34) im Wesentlichen senkrecht ist, zu sein **dadurch gekennzeichnet, dass**
der Generator (24) mit dem Scharnier (30) gekoppelt und in einem Scharniergehäuse (60) angeordnet ist, um den durch die Heizspule (40) geleiteten elektrischen Wechselstrom zu erzeugen und zuzuführen; und
ein Kanal in dem Scharniergehäuse (60) ausgebildet ist, um in einen Lufteinlass (48) eintretende Kühlluft im Allgemeinen hin zu der einstellbaren Kochfläche (22) zu leiten.

13. Kochfeldbaugruppe (10) nach Anspruch 12, wobei der Lufteinlass (48) an dem Scharniergehäuse (60) bereitgestellt ist, um in den Lufteinlass (48) eintretende Kühlluft entlang einer Länge des Scharniergehäuses (60) in einer Richtung quer zu der Richtung der in den Lufteinlass (48) eintretenden und hin zu der einstellbaren Kochfläche (22) strömenden Kühlluft zu leiten.

14. Kochfeldbaugruppe (10) nach Anspruch 13, wobei der Lufteinlass (48) angrenzend an ein seitliches Ende des Scharniergehäuses (60) ausgebildet ist und die Kühlluft in den Lufteinlass (48) eintritt und eine Kühlwirkung auf den Generator (24) bereitstellt, bevor sie durch den Kanal hin zu der einstellbaren Kochfläche (22) geleitet wird.

15. Kochfeldbaugruppe (10) nach Anspruch 12, wobei das Scharniergehäuse (60) im Wesentlichen zylindrisch ist und zumindest teilweise in eine in einer oberen Fläche des Schranks (12) ausgebildete Aussparung einzusetzen ist, an dem die Kochfeld- (10) Baugruppe anzubringen ist.

16. Kochfeldbaugruppe (10) nach Anspruch 12, wobei das Scharnier (30) ein Dämpfungsmerkmal umfasst, das ausgestaltet ist, eine Schwenkeinstellung der einstellbaren Kochfläche (22) hin zu einer oberen Fläche eines Schranks (12), an dem die Kochfeldbaugruppe (10) anzubringen ist, in Relation zu einer ungedämpften Geschwindigkeit, bei der die einstellbare Kochfläche (22) schwenkbar eingestellt werden kann, zu verlangsamen.

17. Kochfeldbaugruppe (10) nach Anspruch 13, wobei der Lufteinlass (48) angrenzend an einen untersten Bereich des Generatorgehäuses (28) derart ausgebildet ist, dass die Kühlluft, die in den Lufteinlass (48) eintritt, eine Kühlwirkung auf den Generator (24) bereitstellt, bevor sie durch den an dem Scharnier (30) bereitgestellten Kanal hin zu der einstellbaren Kochfläche (22) geleitet wird.

18. Kochfeldbaugruppe (10), umfassend:
einen Generator (24), der einen hochfrequenten Wechselstrom erzeugt;
eine einstellbare Kochfläche (22) umfassend eine Heizspule (40), die elektrisch mit dem Generator (24) verbunden ist, um den durch den Generator (24) erzeugten hochfrequenten Wechselstrom zu leiten und einen Induktionsstrom in einem Kochgefäß zu induzieren, das von der einstellbaren Kochfläche (22) getragen ist, während sich die einstellbare Kochfläche (22) in einer Kochausrichtung befindet; und
ein Scharnier (30), das die einstellbare Kochfläche (22) schwenkbar mit dem Generator (24) koppelt und die einstellbare Kochfläche (22) in mehreren unterschiedlichen Winkelausrichtungen in Relation zu dem Generator (24) abstützt;
einen Lufteinlass (48), der in mindestens einem eines einen Abschnitt des Scharniers (30) bildenden Scharniergehäuses (60) und eines mindestens einen Abschnitt des Generators (24) umschließenden Generatorgehäuses (28) ausgebildet ist, **dadurch gekennzeichnet, dass** der Generator (14) ausgestaltet ist, mit einer Fläche eines Schranks (12) gekoppelt zu sein, und das Scharniergehäuse (60) ausgelegt ist, zumindest teilweise in eine in der Fläche des Schranks (12) ausgebildeten Aussparung eingesetzt zu sein;
einen in dem Scharniergehäuse (60) ausgebildeten Kanal, der in den Lufteinlass (48) eintretende Kühlluft im Allgemeinen hin zu der einstellbaren Kochfläche (22) leitet; und eine mit dem Scharnier (30) gekoppelte Dämpfungsvorrichtung, um eine Schwenkeinstellung der einstellbaren Kochfläche (22) hin zu einer oberen Fläche eines Schranks (12), an dem die Kochfeldbaugruppe (10) anzubringen ist, in Relation zu einer ungedämpften Geschwindigkeit, bei der die einstellbare Kochfläche (22) schwenkbar eingestellt werden kann, zu verlangsamen.

## Revendications

1. Système, comprenant une caisse et un ensemble à surface de cuisson (10), le système comprenant :
un générateur (24) qui produit un courant alternatif à haute fréquence ;
une surface de cuisson ajustable (22) comprenant une bobine chauffante (40) électriquement connectée au générateur (24) pour conduire le courant alternatif à haute fréquence produit par le générateur (24) et induire un courant induit dans un récipient de cuisson supporté par la surface de cuisson ajustable (22) alors que la surface de cuisson ajustable (22) est dans une orientation de cuisson ; et
un couplage ajustable qui couple de façon pivotante la surface de cuisson ajustable (22) au générateur (24) et supporte la surface de cuisson ajustable (22) à une pluralité de différentes orientations angulaires relativement au générateur (24), **caractérisé en ce que** la caisse (12) comprend la surface d'un plan de travail (14) prévue sur la caisse (12), et **en ce que** le générateur (24) est situé vers le bas de la surface du plan de travail (14), et **en ce que** le générateur (24) comprend un logement de générateur (28) configuré pour être couplé à une surface de la caisse (12) avec une surface plane principale du logement de générateur (28) orientée dans une orientation sensiblement verticale dans un intérieur de la caisse (12).

2. Système selon la revendication 1, comprenant en outre un connecteur électrique (42) qui est adaptable pour établir une voie de passage conductrice entre le générateur (24) et la bobine chauffante (40) alors que la surface de cuisson ajustable (22) est dans chacune de la pluralité de différentes orientations angulaires.

3. Système selon la revendication 1, dans lequel la surface de plan de cuisson ajustable (22) comprend une vitre sensiblement plane cachant la bobine chauffante (40) et au moins une bobine chauffante additionnelle (40), et la bobine chauffante (40) et l'au moins une bobine chauffante additionnelle (40) sont agencées dans un plan commun sensiblement parallèle à une surface extérieure plane de la vitre.

4. Système selon la revendication 1, dans lequel le couplage ajustable comprend une charnière (30) comprenant une portion sensiblement cylindrique qui est destinée à être au moins partiellement insérée dans un évidement formé dans la surface du plan de travail (14) et qui est exposée lorsque la surface de cuisson ajustable (22) est ajustée dans une orientation verticale relativement au générateur (24).

5. Système selon la revendication 4, dans lequel la charnière (30) comprend un dispositif d'amortissement (44) configuré pour amortir un ajustement de pivotement de la surface de cuisson ajustable (22) autour de la charnière (30) vers la surface supérieure de la caisse (12).

6. Système selon la revendication 4, dans lequel la charnière (30) comprend un ressort d'équilibrage configuré pour empêcher l'ajustement de pivotement de la surface de cuisson ajustable (22) autour de la charnière (30) vers la surface supérieure de la caisse (12) sous seulement une force gravitationnelle, et sans force appliquée de façon externe, transmise sur la surface de cuisson ajustable (22).

7. Système selon la revendication 1, dans lequel le logement de générateur (28) comprend :
une entrée d'air (48) à travers laquelle de l'air de refroidissement entre dans le logement de générateur (28) ; et
un passage intérieur dirigé généralement vers la surface de cuisson ajustable (22), dans lequel l'air de refroidissement entrant dans l'entrée d'air (48) passe à travers le passage intérieur pour fournir un effet de refroidissement au générateur (24) à l'intérieur du logement de générateur (28).

8. Système selon la revendication 7, dans lequel la surface de cuisson ajustable (22) comprend une conduite entre la bobine chauffante et une vitre sur laquelle le récipient de cuisson est destiné à être supporté, et le logement (28) comprend en outre une sortie d'air en communication fluidique avec la conduite à travers laquelle l'air de refroidissement est introduit dans la conduite.

9. Système selon la revendication 4, dans lequel la charnière (30) comprend un logement de charnière généralement cylindrique (60) comprenant :
une entrée formée de façon adjacente à une extrémité latérale de la charnière (30) à travers laquelle de l'air de refroidissement entre dans le logement de charnière (60) ; et
une sortie à travers laquelle l'air de refroidissement entrant dans l'entrée sort du logement de charnière (60) dans une direction généralement vers un bord avant de la surface de cuisson ajustable (22).

10. Système selon la revendication 1 comprenant en outre un dispositif de commande qui interfère avec le fonctionnement de la bobine chauffante (40) alors que la surface de cuisson ajustable (22) est ajustée dans une orientation autre que l'orientation de cuisson.

11. Système selon la revendication 1 comprenant en outre un mécanisme de verrouillage qui empêche l'ajustement de la surface de cuisson ajustable (22) à partir de l'orientation de cuisson alors que le récipient de cuisson est déterminé être présent sur la surface de cuisson ajustable (22).

12. Ensemble à surface de cuisson (10), comprenant :
un générateur (24) qui produit un courant alternatif à haute fréquence ;
une surface de cuisson ajustable (22) comprenant une bobine chauffante (40) qui conduit un courant électrique alternatif et induit un courant induit dans un récipient de cuisson supporté par la surface de cuisson ajustable (22) pour chauffer le récipient de cuisson ;
une charnière (30) qui supporte de façon pivotante la surface de cuisson ajustable (22) pour être ajustée de façon pivotante entre une orientation de cuisson, où une surface exposée de façon externe (34) de la surface de cuisson ajustable (22) est sensiblement horizontale, et une orientation escamotée, où la surface exposée de façon externe (34) est sensiblement verticale, **caractérisé en ce que**
le générateur (24) est couplé à la charnière (30) et est disposé à l'intérieur d'un logement de charnière (60) pour générer et fournir le courant électrique alternatif conduit par la bobine chauffante (40) ; et
une conduite est formée à l'intérieur du logement de charnière (60) pour diriger de l'air de refroidissement entrant dans une entrée d'air (48) généralement vers la surface de cuisson ajustable (22).

13. Ensemble à surface de cuisson (10) selon la revendication 12, dans lequel l'entrée d'air (48) est prévue sur le logement de charnière (60) pour diriger de l'air de refroidissement entrant dans l'entrée d'air (48) le long d'une longueur du logement de charnière (60) dans une direction transversale à la direction de l'air entrant dans l'entrée d'air (48) et s'écoulant vers la surface de cuisson ajustable (22).

14. Ensemble à surface de cuisson (10) selon la revendication 13, dans lequel l'entrée d'air (48) est formée de façon adjacente à une extrémité latérale du logement de charnière (60) et l'air de refroidissement entre dans l'entrée d'air (48) et fournit un effet de refroidissement au générateur (24) avant d'être dirigé par la conduite vers la surface de cuisson ajustable (22).

15. Ensemble à surface de cuisson (10) selon la revendication 12, dans lequel le logement de charnière (60) est sensiblement cylindrique et est destiné à être au moins partiellement inséré dans un évidement formé dans une surface supérieure d'une caisse (12) sur laquelle l'ensemble à plan de cuisson (10) est destiné à être installé.

16. Ensemble à surface de cuisson (10) selon la revendication 12, dans lequel la charnière (30) comprend un dispositif d'amortissement configuré pour ralentir l'ajustement de pivotement de la surface de cuisson ajustable (22) vers une surface supérieure d'une caisse (12), sur laquelle l'ensemble à surface de cuisson (10) est destiné à être installé, relativement à une vitesse non amortie à laquelle la surface de cuisson ajustable (22) peut être ajustée de façon pivotante.

17. Ensemble à surface de cuisson (10) selon la revendication 13, dans lequel l'entrée d'air (48) est formée de façon adjacente à une région la plus basse du logement de générateur (28) de telle sorte que l'air de refroidissement entrant dans l'entrée d'air (48) fournisse un effet de refroidissement au générateur (24) avant d'être dirigé par la conduite prévue sur la charnière (30) vers la surface de cuisson ajustable (22) .

18. Ensemble à surface de cuisson (10), comprenant :
un générateur (24) qui produit un courant alternatif à haute fréquence ;
une surface de cuisson ajustable (22) comprenant une bobine chauffante (40) électriquement connectée au générateur (24) pour conduire le courant alternatif à haute fréquence produit par le générateur (24) et induire un courant induit dans un récipient de cuisson supporté par la surface de cuisson ajustable (22) alors que la surface de cuisson ajustable (22) est dans une orientation de cuisson ;
une charnière (30) qui couple de façon pivotante la surface de cuisson ajustable (22) au générateur (24) et supporte la surface de cuisson ajustable (22) à une pluralité de différentes orientations angulaires relativement au générateur (24) ;
une entrée d'air (48) formée dans au moins un d'un logement de charnière (60), formant une portion de la charnière (30), et d'un logement de générateur (28), entourant au moins une portion du générateur (24), **caractérisé en ce que** le générateur (14) est configuré pour être couplé à une surface d'une caisse (12) et le logement de charnière (60) est adapté pour être au moins partiellement inséré dans un évidement formé dans la surface de la caisse (12) ;
une conduite, formée à l'intérieur du logement de charnière (60), qui transporte de l'air de refroidissement entrant dans l'entrée d'air (48) généralement vers la surface de cuisson ajustable (22) ; et
un dispositif d'amortissement couplé à la charnière (30) pour ralentir l'ajustement de pivotement de la surface de cuisson ajustable (22) vers une surface supérieure d'une caisse (12), sur laquelle l'ensemble à surface de cuisson (10) est destiné à être installé, relativement à une vitesse non amortie à laquelle la surface de cuisson ajustable (22) peut être ajustée de façon pivotante.
